Europäisches Patentamt

European Patent Office

Office européen des brevets

(11) Veröffentlichungsnummer: **0 239 735**
A2

## (12) EUROPÄISCHE PATENTANMELDUNG

(21) Anmeldenummer: 87101182.1

(22) Anmeldetag: 28.01.87

(51) Int. Cl.4: **B61D 13/00** , B61D 17/04 , B61C 9/00 , B61C 9/50 , B62D 27/06

Die Bezeichnung der Erfindung wurde geändert (Richtlinien für die Prüfung im EPA, A-III, 7.3).

(30) Priorität: 26.03.86 DE 3610216

(43) Veröffentlichungstag der Anmeldung:
07.10.87 Patentblatt 87/41

(84) Benannte Vertragsstaaten:
AT BE CH DE FR GB IT LI NL

(71) Anmelder: DUEWAG Aktiengesellschaft
Duisburger Strasse 145
D-4150 Krefeld 11(DE)

(72) Erfinder: Jochims, Paul
Liesentorweg 4b
D-4150 Krefeld 1(DE)
Erfinder: Strater, Heinrich
Maiblumenstrasse 88
D-4100 Duisburg 14(DE)
Erfinder: Gerhard, Thomas
Ingerstrasse 8
D-4154 Tönisvorst 1(DE)

(54) **Elastische Lagerung von Baugruppen in Fahrzeugen, insbesondere Schienenfahrzeugen.**

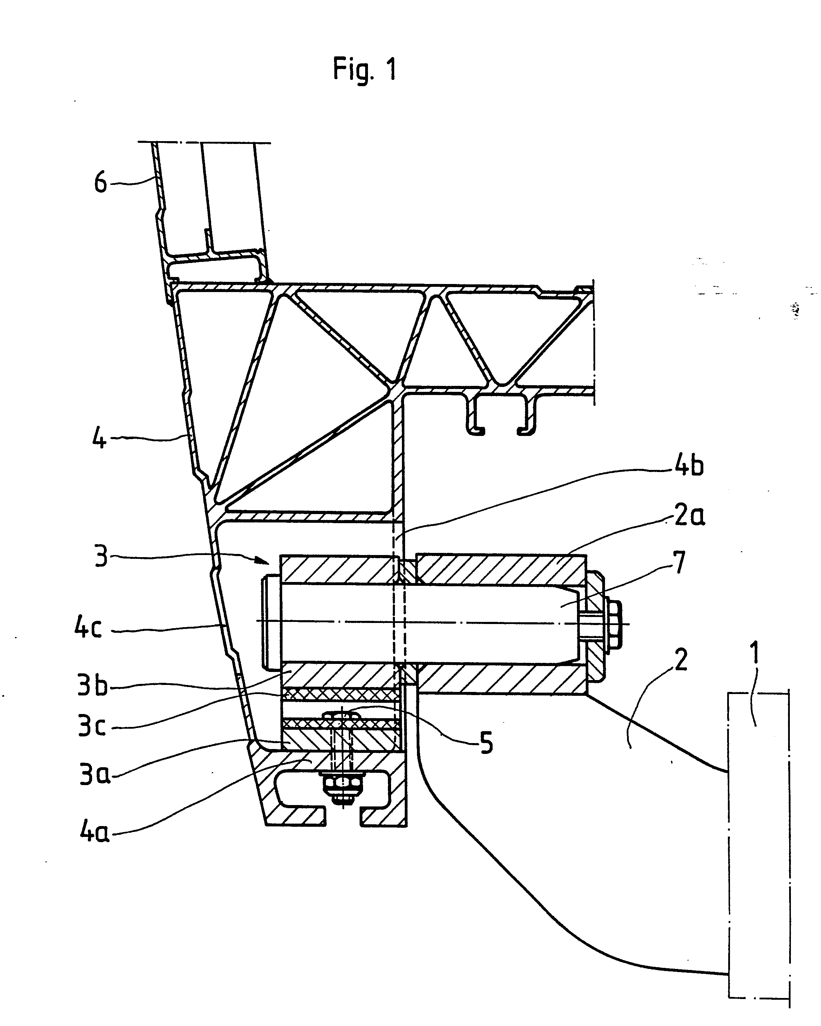

(57) Bei einem Fahrzeug, insbesondere einem Schienenfahrzeug, ist eine im wesentlichen aus einem oder mehreren Bauteilen (1), beispielsweise Motor-Getriebe-Aggregat, Hilfsmaschinen oder Behälter, und Traversen (2) gebildete Baugruppe unter Zwischenschaltung von jeweils an den Endbereichen der Traversen (2) angeordneten elastischen Lagerungen (3) mit Flanschen (4a) von seitlichen Langträgern (4) des Fahrzeuges verbunden. Die elastischen Lagerungen (3) sind innerhalb der Langträger (4) angeordnet und gegen die Oberseite der Langträger-Flansche (4a) abgestützt (Fig. 1).

Fig. 1

EP 0 239 735 A2

## Fahrzeug, insbesondere Schienenfahrzeug

Die Erfindung betrifft ein Fahrzeug, insbesondere Schienenfahrzeug, bei dem eine im wesentlichen aus einem oder mehreren Bauteilen, beispielsweise Motor-Getriebe-Aggregat, Hilfsmaschinen oder Behälter, und Traversen gebildete Baugruppe unter Zwischenschaltung von jeweils an den Endbereichen der Traversen angeordneten elastischen Lagerungen mit Flanschen von seitlichen Langträgern des Fahrzeuges verbunden ist.

Bei bekannten Triebwagen der vorgenannten Art erfolgt die Verbindung der das Aggregat abstützenden Traversen mit den seitlichen Langträgern mit Hilfe von die elastischen Lagerungen aufnehmenden Lagergehäusen, die gegen die Unterseite der Langträger-Flansche anliegen und über Schrauben an diesen Flanschen befestigt sind. Diese Bauweise wird als aufwendig und von den Beanspruchungen her als ungünstig angesehen. Dies gilt in besonderem Maße bei Fahrzeugen, deren seitliche Langträger - zum Bilden von Fahrzeugschürzen in Fortsetzung von tonnenförmig ausgestalteten Fahrzeugseitenwänden - entsprechend zur Fahrzeuglängsmitte hin geneigt ausgebildet sind.

Der Erfindung liegt die Aufgabe zugrunde, bei einem Fahrzeug der gattungsgemäßen Art die Verbindung Traverse-Langträger auf baulich einfachere Weise und im Hinblick auf einen günstigeren, geringere Beanspruchungen ergebenden Kraftfluß vorzunehmen.

Diese Aufgabe wird erfindungsgemäß dadurch gelöst, daß die elastischen Lagerungen innerhalb der Langträger angeordnet und gegen die Oberseite der Langträger-Flansche abgestützt sind.

Nach einer Ausgestaltung der Erfindung ist vorgesehen, daß die als kastenförmige Strangpreßprofile ausgebildeten Langträger in ihrer an die Flansche angrenzenden Innenwandung dem Einführen der elastischen Lagerungen dienende Ausnehmungen aufweisen.

Um die aus dem Bauteil und den Traversen gebildete Baugruppe möglichst einfach ein-und ausbauen zu können, besteht eine Ausführungsform der Erfindung darin, daß die Traversen und die elastischen Lagerungen jeweils lösbar, z.B. durch einen Tragbolzen oder eine Schraubverbindung, miteinander verbunden sind.

Bei dem Gegenstand gemäß der Erfindung dienen vorteilhaft die seitlichen Langträger unmittelbar als Lagergehäuse für die elastischen Lagerungen der jeweiligen Traverse; separate Lagergehäuse und beanspruchungsmäßig ungünstige, hängende Schraubverbindungen sind also nicht mehr erforderlich. Durch die gegenüber der bekannten Ausführung auf einer höheren Ebene erfolgende Krafteinleitung ergibt sich vor allem bei den, wie eingangs beschrieben, geneigt ausgebildeten Langträgern ein günstigerer Kraftfluß in Richtung auf die Seitenwände, bei dem die Biegemomente und damit die Beanspruchungen verringert sind. Schließlich ist die erfindungsgemäße Abstützung auf der Oberseite der Langträger-Flansche auch als sicherer zu betrachten.

Ein Ausführungsbeispiel der Erfindung ist in der Zeichnung schematisch dargestellt und wird im folgenden näher beschrieben. Es zeigen

Fig. 1 den Bereich eines Langträgers mit einer daran anschließenden Seitenwand, im Querschnitt,

Fig. 2 eine Seitenansicht des Langträgers nach Fig. 1, und zwar dessen unteren Abschnitt, im vergrößerten Maßstab.

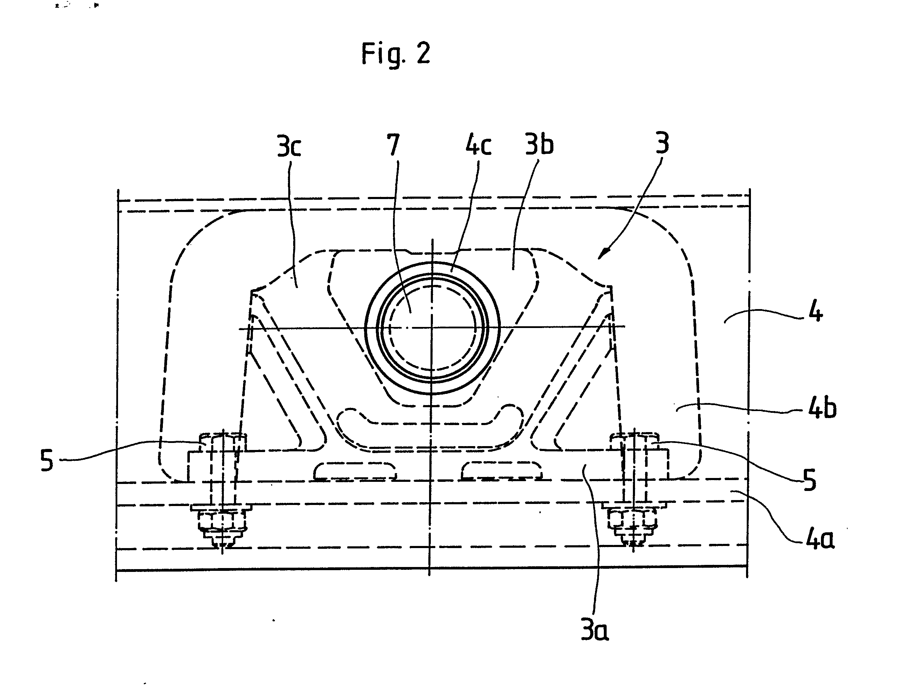

Gemäß Fig. 1 ist an dem Endbereich einer Traverse 2, die einen hier strichpunktiert gezeichneten Bauteil 1 (z.B. ein Motor-Getriebe-Aggregat) aufnimmt, eine elastische Lagerung 3 angeordnet. Wie aus Fig. 1 und 2 ersichtlich, besteht diese Lagerung 3 aus einem Grundkörper 3a, einem Druckkörper 3b und einem zwischen diesen Körpern befindlichen federnden Mittel 3c.

Die elastische Lagerung 3 ist innerhalb eines als Strangpreßprofil ausgebildeten Langträgers 4 angeordnet, gegen die Oberseite eines Langträger-Flansches 4a abgestützt und mit diesem Flansch 4a durch Schrauben 5 verbunden. Zum Einführen der Lagerung 3 in den Langträger 4 weist dessen an den Flansch 4a angrenzende Innenwandung eine Ausnehmung 4b auf. Die Außenwandung des Langträgers 4 ist zur Fahrzeuglängsmitte hin geneigt, um in Fortsetzung einer tonnenförmig gestalteten Seitenwand 6 eine Fahrzeugschürze zu bilden.

Um die aus dem Bauteil 1 und der Traverse 2 gebildete Baugruppe möglichst einfach ein-und ausbauen zu können, greift ein den Druckkörper 3b der Lagerung 3 durchdringender Tragbolzen 7 in eine Buchse 2a der Traverse 2 ein, wobei die Außenwandung des Langträgers 4 mit einer Montageöffnung 4c für den Tragbolzen 7 versehen ist.

Die Federwege der elastischen Lagerung 3 sind durch nicht dargestellte Längs-und Queranschläge begrenzt.

## Ansprüche

1. Fahrzeug, insbesondere Schienenfahrzeug, bei dem eine im wesentlichen aus einem oder mehreren Bauteilen (1), beispielsweise Motor-Getriebe-Aggregat, Hilfsmaschinen oder Behälter, und Traversen (2) gebildete Baugruppe unter Zwischenschaltung von jeweils an den Endbereichen der Traversen (2) angeordneten elastischen Lagerungen (3) mit Flanschen (4a) von seitlichen Langträgern (4) des Fahrzeuges verbunden ist, dadurch gekennzeichnet, daß die elastischen Lagerungen (3) innerhalb der Langträger (4) angeordnet und gegen die Oberseite der Langträger-Flansche (4a) abgestützt sind.

2. Fahrzeug nach Anspruch 1, dadurch gekennzeichnet, daß die als kastenförmige Strangpreßprofile ausgebildeten Langträger (4) in ihrer an die Flansche (4a) angrenzenden Innenwandung dem Einführen der elastischen Lagerungen (3) dienende Ausnehmungen (4b) aufweisen.

3. Fahrzeug nach Anspruch 1 oder 2, dadurch gekennzeichnet, daß die Traversen (2) und die elastischen Lagerungen (3) jeweils lösbar, z.B. durch einen Tragbolzen (7) oder eine Schraubverbindung, miteinander verbunden sind.

Fig. 1

# Fig. 2

Labels: 3c, 7, 4c, 3b, 3, 4, 4b, 5, 5, 4a, 3a

DUEWAG  Aktiengesellschaft

M.1122

0 239 735